# EUROPÄISCHE PATENTANMELDUNG

(11) **EP 4 809 821 A1**
(43) Veröffentlichungstag der Anmeldung: **23.09.2026**
(21) Anmeldenummer: 26166024.5
(22) Anmeldetag: 19.03.2026
(51) Int. Cl.: A01K 1/00

(54) **HALTUNGSBUCHTSYSTEM FÜR EINE TIERHALTUNGSBUCHT**

(30) Priorität: 20.03.2025 LU 600662
(71) Anmelder: Big Dutchman International GmbH, 49377 Vechta (DE)
(72) Erfinder: Nguyen, Michael, 49377 Vechta (DE); Mann, Leon, 49685 Emstek (DE); Skljar, Denis, 49356 Diepholz (DE)
(74) Vertreter: Eisenführ Speiser

(57) **Zusammenfassung**

Die Erfindung betrifft ein Haltungsbuchtsystem für eine Tierhaltungsbucht sowie eine Tierhaltungsbucht und ein Verfahren zum Zusammenbau einer Tierhaltungsbucht. Es ist ein Haltungsbuchtsystem (1) für eine Tierhaltungsbucht (80) vorgesehen, das Folgendes umfassend: ein plattenförmiges Wandelement (10), das eine Außenoberfläche (15) aufweist und das dazu ausgebildet ist, einen Wandabschnitt einer Tierhaltungsbucht (80) auszubilden, wobei das Wandelement (10) einen ersten Wandelementendabschnitt (11) aufweist, wobei der erste Wandelementendabschnitt (11) eine erste Stirnseite (11a) und an die Stirnseite (11a) angrenzende Seitenflächenendabschnitte (11b) aufweist, ein Verbindungselement (30), das eine Innenoberfläche (33) aufweist und das einen Dichtungsaufnahmebereich (31) aufweist, und ein Dichtungselement (20), das eine Außenoberfläche (23) und eine Innenoberfläche (25) aufweist und das an dem ersten Wandelementendabschnitt (11) angeordnet und mit dem ersten Wandelementendabschnitt (11) verbunden ist, wobei das Dichtungselement (20) zumindest teilweise innerhalb des Dichtungsaufnahmebereichs (31) des Verbindungselements (30) angeordnet ist.

## Beschreibung

Die Erfindung betrifft ein Haltungsbuchtsystem für eine Tierhaltungsbucht sowie eine Tierhaltungsbucht und ein Verfahren zum Zusammenbau einer Tierhaltungsbucht.

Auf dem Gebiet der Tierhaltung ist es üblich, dass Tierhaltungsbuchten durch verschiedene Wandelemente und Verbindungselemente strukturiert werden, um eine sichere Umgebung für die Tiere zu schaffen. Bekannte Systeme umfassen typischerweise starre Wandelemente, die durch mechanische Verbindungselemente miteinander verbunden werden.

Die für Tierhaltungsbuchten verwendeten Wandelemente bestehen häufig aus Kunststoffprofilen, die als Hohlprofile mit einer inneren Füllstruktur ausgeführt und verbunden sind. Diese Wandelemente werden typischerweise mit Verbindungselementen verbunden. Bei der Verbindung solcher Wandelemente mit Verbindungselementen können aufgrund von Umständen wie dem Wellen des Kunststoffs oder dem Montieren von Schraubverbindungen kleinere Öffnungen zwischen den einzelnen Komponenten entstehen. Diese Öffnungen bieten Zugang und Nistmöglichkeiten für Insekten, wie Fliegen oder Maden, die in dem geschützten, nicht klimatisierten Innenbereich der Wandelemente einen Unterschlupf finden und sich in der Folge von dort aus ausbreiten können. Daher können sich ohne eine Reinigung des Innenbereichs der Wandelemente, die nur nach Trennung der Verbindungselemente erfolgen kann, verschiedene Pathogene bilden, die sowohl für Tiere als auch für Menschen schädlich sein können.

Der Erfindung liegt daher die Aufgabe zugrunde, eine verbesserte Lösung bereitzustellen, welche die genannten Probleme adressiert. Insbesondere ist es Aufgabe der Erfindung, eine Lösung bereitzustellen, durch die die Hygiene von Haltungsbuchtsystemen für Tierhaltungsbuchten verbessert werden kann.

Gemäß einem ersten Aspekt wird die Aufgabe gelöst durch ein Haltungsbuchtsystem mit den Merkmalen des Anspruchs 1. Demnach ist ein Haltungsbuchtsystem für eine Tierhaltungsbucht vorgesehen, das Haltungsbuchtsystem umfassend: ein plattenförmiges Wandelement, das eine Außenoberfläche aufweist und das dazu ausgebildet ist, einen Wandabschnitt einer Tierhaltungsbucht auszubilden, wobei das Wandelement einen ersten Wandelementendabschnitt aufweist, wobei der erste Wandelementendabschnitt eine erste Stirnseite und an die Stirnseite angrenzende Seitenflächenendabschnitte aufweist, ein Verbindungselement, das eine Innenoberfläche aufweist und das einen Dichtungsaufnahmebereich aufweist, und ein Dichtungselement, das eine Außenoberfläche und eine Innenoberfläche aufweist und das an dem ersten Wandelementendabschnitt angeordnet und mit dem ersten Wandelementendabschnitt verbunden ist, wobei das Dichtungselement zumindest teilweise innerhalb des Dichtungsaufnahmebereichs des Verbindungselements angeordnet ist.

Das plattenförmige Wandelement ist dazu ausgebildet, einen Wandabschnitt einer Tierhaltungsbucht auszubilden. Das Wandelement ist plattenförmig, weist also die Form einer ebenen Platte mit einer Dicke, die um ein Vielfaches kleiner ist, als Breite und Höhe des Wandelements. Das Wandelement kann somit insbesondere die Form eines Quaders mit einer um ein Vielfaches geringeren Dicke im Vergleich zu den anderen beiden Erstreckungsrichtungen aufweisen.

Der erste Wandelementendabschnitt weist eine erste Stirnseite und daran angrenzende Seitenflächenendabschnitte auf. Die Seitenflächenendabschnitte sind insbesondere die Endabschnitte der Seitenflächen des Wandelements, die unmittelbar neben der ersten Stirnseite angeordnet sind.

Der Dichtungsaufnahmebereich dient insbesondere dazu, das Dichtungselement zumindest teilweise aufzunehmen. Der Dichtungsaufnahmebereich ist daher vorzugsweise dazu ausgebildet, das Dichtungselement zumindest teilweise, bevorzugt vollständig, aufzunehmen.

Ein Vorteil eines solchen Systems ist die Verwendung des Dichtungselements in Kombination mit dem Verbindungselement und dem Wandelement, wodurch eine Abdichtung von Öffnungen zwischen den Bauteilen erreicht werden kann, was zur hygienischen Reinhaltung der Bauteile, insbesondere des Wandelements, im Bereich der Verbindung der Bauteile beiträgt.

Durch die Verwendung des Dichtungsaufnahmebereichs und des darin angeordneten Dichtungselements und durch die Anordnung des Dichtungselements an dem ersten Wandelementendabschnitt kann erreicht werden, dass weder zwischen Dichtungselement und Wandelement noch zwischen Dichtungselement und Verbindungselement Lücken vorhanden sind, durch die sich beispielsweise Insekten bewegen könnten.

Ein Vorteil des Systems ist somit die verbesserte Hygiene im Vergleich zu bekannten Systemen.

Ein Vorteil dieses Systems ist ferner die erleichterte Montage durch die Verwendung von konstruktiv aufeinander abgestimmtem Dichtungselement und Verbindungselement.

Es ist besonders bevorzugt, dass die Außenoberfläche des Dichtungselements und die Innenoberfläche des Verbindungselements derart angeordnet und ausgebildet sind, dass zumindest abschnittsweise eine Presspassung zwischen der Außenoberfläche des Dichtungselements und der Innenoberfläche des Verbindungselements vorhanden ist,
Vorzugsweise wird mittels der Presspassung zwischen dem Dichtungselement und dem Verbindungselement eine kraftschlüssige, und vorzugsweise lösbare, Verbindung zwischen dem Dichtungselement und dem Verbindungselement ausgebildet. Vorzugsweise sind das Dichtungselement und das Verbindungselement nicht stoffschlüssig miteinander verbunden.

Unter einer Presspassung ist eine Passung zu verstehen, bei der zwei miteinander zu verbindende Teile so dimensioniert sind, dass sie durch mechanischen Druck, also kraftschlüssig, zusammengehalten werden. Die Presspassung sorgt dafür, dass das Dichtungselement fest an seinem Platz bleibt und eine zuverlässige Abdichtung gewährleistet.

Ein Vorteil dieser Anordnung ist eine verbesserte Montageerleichterung, da das Dichtungselement durch die Presspassung sicher und stabil fixiert werden kann. Ein weiterer Vorteil ist die hygienische Abdichtung der Verbindungsstellen, wodurch das Eindringen von Schmutz und Pathogenen verhindert wird.

Es ist besonders bevorzugt, dass die Außenoberfläche des Wandelements und die Innenoberfläche des Dichtungselements derart ausgebildet sind, dass zumindest abschnittsweise eine Spielpassung zwischen der Außenoberfläche des Wandelements und der Innenoberfläche des Dichtungselements vorhanden ist.

Durch die Spielpassung wird auf besonders vorteilhafte Weise eine einfache Montage des Dichtungselements an dem Wandelement ermöglicht, da ein Aufschieben des Dichtungselements auf das Wandelement aufgrund des Spiels besonders einfach möglich ist.

Vorzugsweise sind das Wandelement und das Dichtungselement lösbar, und insbesondere nicht stoffschlüssig, miteinander verbunden.

Vorzugsweise besteht zwischen der Außenoberfläche des Wandelements und der Innenoberfläche des Dichtungselements nur abschnittsweise eine Spielpassung, sodass vorzugsweise zu Beginn des Aufschiebens des Dichtungselements auf das Wandelement ein Spiel vorhanden ist und dann in dem zuletzt aufgeschobenen Bereich des Dichtungselements entweder nur ein sehr viel geringeres Spiel oder gar kein Spiel mehr zum Wandelement vorhanden ist.

Es ist besonders bevorzugt, dass die Innenoberfläche des Dichtungselements aufgrund der Presspassung zwischen der Außenoberfläche des Dichtungselements und der Innenoberfläche des Verbindungselements auf die Außenoberfläche des Wandelements gedrückt wird.

Vorzugsweise wird demnach das Dichtungselement auf die Außenoberfläche des Wandelements gedrückt. Soweit eine Spielpassung zwischen Dichtungselement und Wandelement vorhanden ist, wird vorzugsweise auch im Bereich einer solchen Spielpassung das Dichtungselement auf die Außenoberfläche des Wandelements gedrückt.

Diese spezifische Anordnung und Interaktion zwischen den Komponenten führt zu einer verbesserten Dichtwirkung. Die Presspassung, die durch die Toleranz zwischen den Oberflächen des Dichtungselements und des Verbindungselements entsteht, sorgt dafür, dass die Dichtung in ihrer Position bleibt und eine zuverlässige Abdichtung gewährleistet. Dies ist besonders vorteilhaft in Umgebungen, in denen Hygiene von größter Bedeutung ist, wie in der Tierhaltung, da es das Eindringen von Schmutz, Feuchtigkeit und potenziellen Krankheitserregern in die Zwischenräume der Stallkonstruktion verhindert.

Die Presspassung ermöglicht auch eine kraftschlüssige Verbindung, die eine einfache Montage und Demontage der Komponenten erlaubt, ohne dass zwingend zusätzliche Befestigungsmittel erforderlich sind. Dies vereinfacht nicht nur den Installationsprozess, sondern erleichtert auch die Wartung und Reinigung der Stallanlage, da die Dichtelemente bei Bedarf leicht ausgetauscht oder gereinigt werden können.

Ein weiterer Vorteil dieser Konstruktion ist die Reduzierung von Materialermüdung und Verschleiß, da das Dichtungselement weniger mechanischem Stress ausgesetzt ist, der durch lose oder unzureichend befestigte Komponenten verursacht werden könnte.

Es ist besonders bevorzugt, dass das Dichtungselement zwischen der Innenoberfläche des Verbindungselements und der Außenoberfläche des Wandelements zusammengedrückt wird, und sich dabei elastisch verformt.

Vorzugsweise verformt sich das Dichtungselement zumindest in einem Bereich zwischen dem Wandelement und dem Verbindungselement demnach elastisch. Das Dichtungselement wird sozusagen zusammengequetscht.

Diese spezifische Anordnung ermöglicht eine verbesserte Interaktion zwischen den Komponenten des Systems, indem sie eine zuverlässige Abdichtung gewährleistet. Die elastische Verformung des Dichtungselements ist ein Mechanismus, der dazu beiträgt, dass das Dichtungselement effektiv den Raum zwischen den beiden Oberflächen ausfüllt und somit eine dichte Barriere bildet. Diese Barriere verhindert das Eindringen von Schmutz, Feuchtigkeit und potenziellen Krankheitserregern.

Die Kombination aus der Presspassung, die eine kraftschlüssige Verbindung zwischen den Komponenten sicherstellt, und der elastischen Verformung des Dichtungselements, die eine effektive Abdichtung ermöglicht, führt zu einem System, das sowohl robust als auch flexibel ist.

Es ist besonders bevorzugt, dass der Dichtungsaufnahmebereich durch Seitenwände begrenzt ist, die derart angeordnet sind, dass der Dichtungsaufnahmebereich eine Aufweitung in Richtung des Wandelements aufweist.

Der Dichtungsaufnahmebereich dient insbesondere dazu, das Dichtungselement aufzunehmen und sicher zu halten. Die Seitenwände, die den Dichtungsaufnahmebereich begrenzen, sind vorzugsweise so gestaltet, dass sie sich in Richtung des Wandelements verbreitern. Diese Aufweitung erleichtert das Einführen und Positionieren des Dichtungselements innerhalb des Dichtungsaufnahmebereichs.

Der Dichtungsaufnahmebereich ist also vorzugsweise durch die Anordnung der Seitenwände konisch ausgebildet. Durch die konische Form der Seitenwände wird das Dichtungselement beim Einsetzen in den Dichtungsaufnahmebereich allmählich komprimiert, was zu einer besseren Anpassung und Abdichtung führt. Dies trägt dazu bei, dass das Dichtungselement fest und sicher sitzt, wodurch die Gefahr des Verrutschens oder des Lösens minimiert wird.

Ein Vorteil dieser Konstruktion ist die verbesserte Dichtwirkung, da das Dichtungselement auf diese Weise durch die Aufweitung der Seitenwände gleichmäßig und fest an die Innenoberfläche des Verbindungselements gepresst werden kann. Dies gewährleistet eine zuverlässige Abdichtung und verhindert das Eindringen von Schmutz, Feuchtigkeit oder Krankheitserregern in die Zwischenräume.

Ein weiterer Vorteil ist die erleichterte Montage, da die Aufweitung der Seitenwände das Einführen des Dichtungselements in den Dichtungsaufnahmebereich vereinfacht. Dies reduziert den Kraftaufwand und die Zeit, die für die Montage erforderlich ist, und minimiert das Risiko von Beschädigungen an der Dichtung oder den Verbindungselementen.

Es ist besonders bevorzugt, dass das Dichtungselement einen, vorzugsweise umlaufenden, Aufschiebeabschnitt, der auf die Seitenflächenendabschnitte des ersten Wandelementendabschnitts aufschiebbar ist, und einen Vorderabschnitt, der ausgebildet ist, um zumindest teilweise an der ersten Stirnfläche des ersten Wandelementendabschnitts anzuliegen, aufweist.

Der Aufschiebeabschnitt ist demnach vorzugsweise so gestaltet, dass er auf die Seitenflächenendabschnitte des ersten Wandelementendabschnitts aufgeschoben werden kann. Dies bedeutet, dass der Aufschiebeabschnitt des Dichtungselements vorzugsweise eine Form und Größe hat, die es ermöglichen, ihn über die Enden der Seitenflächen des ersten Wandelements zu schieben. Der Vorderabschnitt des Dichtungselements ist dabei vorzugsweise so konzipiert, dass er zumindest teilweise an der ersten Stirnfläche des ersten Wandelementendabschnitts anliegt. Dies bedeutet, dass der Vorderabschnitt des Dichtungselements so geformt ist, dass er in Kontakt mit der Stirnfläche des Wandelements kommt und dadurch eine zusätzliche Dichtungsfunktion bietet. Der Vorderabschnitt des Dichtungselements trägt auch zur Stabilität und Integrität der Struktur bei, indem er eine zusätzliche Kontaktfläche bietet, die die Gesamtverbindung verstärkt.

Es ist besonders bevorzugt, dass das Dichtungselement zumindest teilweise an der ersten Stirnseite des ersten Wandelementendabschnitts und/oder zumindest teilweise an den Seitenflächenendabschnitten des ersten Wandelementendabschnitts anliegt.

Es ist besonders bevorzugt, dass die Innenoberfläche des Dichtungselements im Bereich des Aufschiebeabschnitts des Dichtungselements aufgeweitet ausgebildet ist. Dies bedeutet, dass die Innenfläche des Dichtungselements, die mit dem Wandelementendabschnitt in Kontakt kommt, eine größere Öffnung aufweist, die das Aufschieben des Dichtungselements erleichtert. Diese Konstruktion ermöglicht eine einfachere und schnellere Montage, da weniger Kraft aufgewendet werden muss, um das Dichtungselement auf das Wandelement zu schieben.

Vorzugsweise weist die Passung zwischen Dichtungselement und Wandelementendabschnitt in einem dem Vorderabschnitt des Dichtungselements fernliegenden zweiten Abschnitt des Aufschiebeabschnitts ein erstes Spiel auf. Vorzugsweise weist die Passung zwischen Dichtungselement und Wandelementendabschnitt in einem an den Vorderabschnitt des Dichtungselements angrenzenden ersten Abschnitt des Aufschiebeabschnitts ein zweites Spiel, das geringer als das erste Spiel ist, oder kein Spiel auf. Unter einem solchen Spiel ist insbesondere zu verstehen, dass das Dichtungselement im nicht montierten Zustand einen geringfügig größeren Innendurchmesser als der Außendurchmesser des Wandelementendabschnitts hat, wodurch, zumindest abschnittsweise, eine Spielpassung entsteht, die ein leichteres Aufbringen des Dichtungselements auf das Wandelement ermöglicht.

Es ist besonders bevorzugt, dass die Innenoberfläche des Dichtungselements im Bereich des Aufschiebeabschnitts des Dichtungselements vor dem Aufschieben des Dichtungselements auf den Wandelementendabschnitt relativ zur Außenoberfläche des Wandelements einen ersten Winkel ausbildet.

Der erste Winkel ermöglicht ein leichteres Aufziehen des Dichtungselements auf das Wandelement, da durch den ersten Winkel eine Aufweitung der Innenoberfläche des Dichtungselements erzeugt wird.

Vorzugsweise beträgt der erste Winkel mindestens 0,1°, vorzugsweise mindestens 0,2°, besonders bevorzugt mindestens 0,3°, und/oder höchstens 3°, vorzugsweise höchstens 2,5°, besonders bevorzugt höchstens 2°.

Es ist besonders bevorzugt, dass die Innenoberfläche des Verbindungselements relativ zur Außenoberfläche des Wandelements einen zweiten Winkel ausbildet.

Der zweite Winkel ermöglicht ein leichteres Anordnen des Dichtungselements in dem Dichtungsaufnahmeabschnitt des Verbindungselements, da durch den zweiten Winkel eine Aufweitung der Innenoberfläche des Verbindungselements erzeugt wird.

Vorzugsweise beträgt der zweite Winkel mindestens 0,2°, vorzugsweise mindestens 0,3°, besonders bevorzugt mindestens 0,5°, und/oder höchstens 5°, vorzugsweise höchstens 4°, besonders bevorzugt höchstens 3°.

Es ist besonders bevorzugt, dass der Aufschiebeabschnitt des Dichtungselements eine Wandstärke aufweist, die nicht konstant ist, sondern ausgehend von dem Vorderabschnitt des Dichtungselements entlang des Aufschiebeabschnitts zunimmt.

Durch einen solchen Verlauf der Wandstärke des Dichtungselements kann auf besonders vorteilhafte Weise erreicht werden, dass das Dichtungselement zwischen dem Wandelement und dem Verbindungselement gequetscht und somit elastisch verformt wird, wodurch eine besonders gute Dichtwirkung realisiert werden kann.

Es ist besonders bevorzugt, dass die Innenoberfläche des Dichtungselements und die Außenoberfläche des Dichtungselements nicht parallel zueinander verlaufen, sodass zwischen der Innenoberfläche des Dichtungselements und der Außenoberfläche des Dichtungselements ein dritter Winkel gebildet wird.

Der dritte Winkel ermöglicht eine verbesserte Dichtwirkung durch ein stärkeres Quetschen des Dichtungselements, ohne dass es dadurch zu Montageschwierigkeiten kommt.

Vorzugsweise beträgt der dritte Winkel mindestens 0,2°, vorzugsweise mindestens 0,3°, besonders bevorzugt mindestens 0,5°, und/oder höchstens 5°, vorzugsweise höchstens 4°, besonders bevorzugt höchstens 3°.

Es ist besonders bevorzugt, dass der dritte Winkel größer ist als die Summe aus dem ersten Winkel und dem zweiten Winkel.

Der Erfindung liegt unter anderem die Erkenntnis zugrunde, dass ein solches Verhältnis der Winkel einerseits zu einer besonders zuverlässigen und guten Dichtwirkung und andererseits zu einer besonders guten Montierbarkeit der Bauteile führt.

Es ist besonders bevorzugt, dass der erste Winkel kleiner ist als der zweite Winkel und/oder der zweite Winkel kleiner ist als der dritte Winkel.

Ein solches Verhältnis der Winkel kann zu einer besonders zuverlässigen und guten Dichtwirkung und außerdem zu einer besonders guten Montierbarkeit der Bauteile beitragen.

Es ist besonders bevorzugt, dass die erste Stirnseite durch mehrere, insbesondere vier, Kanten des ersten Wandelementendabschnittes des Wandelements begrenzt ist, wobei das Dichtungselement die Kanten des ersten Wandelementendabschnitts des Wandelements, vorzugsweise vollständig, abdeckt. Die erste Stirnseite erstreckt sich dabei vorzugsweise zwischen den mehreren Kanten.

Vorzugsweise weist das Dichtungselement einen Kragen auf, der die Kanten des ersten Wandelementendabschnitts des Wandelements, vorzugsweise vollständig, abdeckt, wobei vorzugsweise der Kragen die Stirnseite nicht vollständig abdeckt.

Vorzugsweise ist ein Teil der Stirnseite, insbesondere ein mittiger Teil der Stirnseite, nicht durch das Dichtungselement bedeckt. Das Dichtungselement weist somit vorzugsweise eine durch den Kragen gebildete Öffnung auf, wobei die Stirnseite im Bereich der Öffnung nicht von dem Dichtelement abgedeckt ist.

Es ist besonders bevorzugt, dass das Dichtungselement lösbar mit dem Verbindungselement verbunden, und vorzugsweise in das Verbindungselement einschiebbar, ist.

Es ist besonders bevorzugt, dass das Dichtungselement lösbar mit dem ersten Wandelementendabschnitt verbunden, und vorzugsweise auf den Wandelementendabschnitt aufschiebbar, ist.

Es ist besonders bevorzugt, dass das Wandelement Kunststoff, vorzugsweise einen thermoplastischen Kunststoff, umfasst oder daraus besteht und vorzugsweise als Leichtbauplatte, insbesondere mit darin vorhandenen Hohlräumen, ausgebildet ist. Der Kunststoff kann beispielsweise Polypropylen und/oder Polyamid umfassen oder daraus bestehen. Es ist auch denkbar, dass ein Kunststoff, beispielsweise Polyamid, mit einer Faserverstärkung, wie einer Glasfaserverstärkung, eingesetzt wird. Ganz besonders bevorzugt als Material für das Wandelement ist die Verwendung von glasfaserverstärktem Polyamid. Vorzugsweise sind innerhalb des plattenförmigen Wandelements Hohlräume ausgebildet, um Material einzusparen und ein geringes Bauteilgewicht zu ermöglichen. Vorzugsweise erstreckt sich ein Teil der Hohlräume zur ersten Stirnseite.

Es ist besonders bevorzugt, dass das Dichtungselement Kunststoff, vorzugsweise in Form eines Elastomers oder in Form von Weich-PVC, umfasst oder daraus besteht. Der Kunststoff kann insbesondere als thermoplastischer Elastomer oder als Weich-PVC, also Polyvinylchlorid, das Weichmacher enthält, ausgebildet sein.

Es ist besonders bevorzugt, dass das Verbindungselement Kunststoff umfasst oder daraus besteht. Der Kunststoff kann beispielsweise Polypropylen und/oder Polyamid umfassen oder daraus bestehen. Es ist auch denkbar, dass ein Kunststoff, beispielsweise Polyamid, mit einer Faserverstärkung, wie einer Glasfaserverstärkung, eingesetzt wird. Ganz besonders bevorzugt als Material für das Verbindungselement ist die Verwendung von glasfaserverstärktem Polyamid.

Es ist besonders bevorzugt, dass das Wandelement einen zweiten Wandelementendabschnitt aufweist, der auf der dem ersten Wandelementendabschnitt gegenüberliegenden Seite des Wandelements angeordnet ist, zur Verbindung mit einem weiteren Dichtungselement, das vorzugsweise wie das Dichtungselement ausgebildet ist.

Gemäß einem weiteren Aspekt wird die eingangs genannte Aufgabe gelöst durch eine Tierhaltungsbucht, umfassend mehrere wie hier beschriebene Haltungsbuchtsysteme, wobei vorzugsweise oberhalb der Wandelemente horizontal verlaufende Rohre angeordnet sind, die bevorzugt mittels Rohrverbindungselementen direkt mit dem jeweiligen Wandelement verbunden sind.

Ein Vorteil dieser Konstruktion ist die verbesserte Stabilität der Tierhaltungsbucht, da die horizontal verlaufenden Rohre eine zusätzliche strukturelle Unterstützung bieten. Dies ist besonders wichtig in Umgebungen, in denen die Wandelemente starken Belastungen und Bewegungen ausgesetzt sind. Durch die Verwendung von Rohrverbindungselementen wird zudem die Montage der Rohre erleichtert, da diese Elemente eine einfache und schnelle Befestigung ermöglichen. Ein weiterer Vorteil ist die erhöhte Flexibilität bei der Gestaltung und Anpassung der Tierhaltungsbucht, da die Rohre und Verbindungselemente leicht an unterschiedliche Anforderungen und Gegebenheiten angepasst werden können.

Gemäß einem weiteren Aspekt wird die eingangs genannte Aufgabe gelöst durch einen Stall für die Tierhaltung, wobei der Stall mindestens eine wie hier beschriebene Tierhaltungsbucht, vorzugsweise mehrere wie hier beschriebene Tierhaltungsbuchten, umfasst.

Gemäß einem weiteren Aspekt wird die eingangs genannte Aufgabe gelöst durch ein Verfahren zum Zusammenbau einer Tierhaltungsbucht, vorzugsweise einer wie hier beschriebenen Tierhaltungsbucht, das Verfahren umfassend: Bereitstellen eines Haltungsbuchtsystems für eine Tierhaltungsbucht, vorzugsweise eines wie hier beschriebenen Haltungsbuchtsystems, das Haltungsbuchtsystem umfassend: ein plattenförmiges Wandelement, das eine Außenoberfläche aufweist und das dazu ausgebildet ist, einen Wandabschnitt einer Tierhaltungsbucht auszubilden, wobei das Wandelement einen ersten Wandelementendabschnitt aufweist, wobei der erste Wandelementendabschnitt eine erste Stirnseite und an die Stirnseite angrenzende Seitenflächenendabschnitte aufweist, ein Verbindungselement, das eine Innenoberfläche aufweist und das einen Dichtungsaufnahmebereich aufweist, und ein Dichtungselement, das eine Außenoberfläche und eine Innenoberfläche aufweist und das an dem ersten Wandelementendabschnitt angeordnet und mit dem ersten Wandelementendabschnitt verbunden ist, wobei das Dichtungselement zumindest teilweise innerhalb des Dichtungsaufnahmebereichs des Verbindungselements angeordnet ist, Aufschieben des Dichtungselements auf den Wandelementendabschnitt des Wandelements, sodass das Dichtungselement an der ersten Stirnseite des ersten Wandelementendabschnitts angeordnet ist, und vorzugsweise die Stirnseite zumindest teilweise bedeckt, Anordnen des Dichtungselements in dem Dichtungsaufnahmebereich des Verbindungselements.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: einen Stall mit mehreren Tierhaltungsbuchten, die Haltungsbuchtsysteme aufweisen;
- Fig. 2:: eine perspektivische Darstellung eines Haltungsbuchtsystems mit einem Wandelement, einem Dichtungselement und einem Verbindungselement, wobei die Bauteile noch nicht miteinander verbunden sind;
- Fig. 3:: mehrere Ansichten des Haltungsbuchtsystems, wobei das Wandelement, das Dichtungselement und das Verbindungselement noch nicht miteinander verbunden sind;
- Fig. 4:: mehrere Ansichten des Haltungsbuchtsystems, wobei das Wandelement, das Dichtungselement und das Verbindungselement in einem Zustand während der Montage gezeigt sind;
- Fig. 5:: mehrere Ansichten des Haltungsbuchtsystems, wobei das Wandelement, das Dichtungselement und das Verbindungselement in einem montierten Zustand gezeigt sind;
- Fig. 6:: mehrere Ansichten des Dichtungselements;
- Fig. 7:: ein schematisches Flussdiagramm eines Verfahrens zum Zusammenbau einer Tierhaltungsbucht.

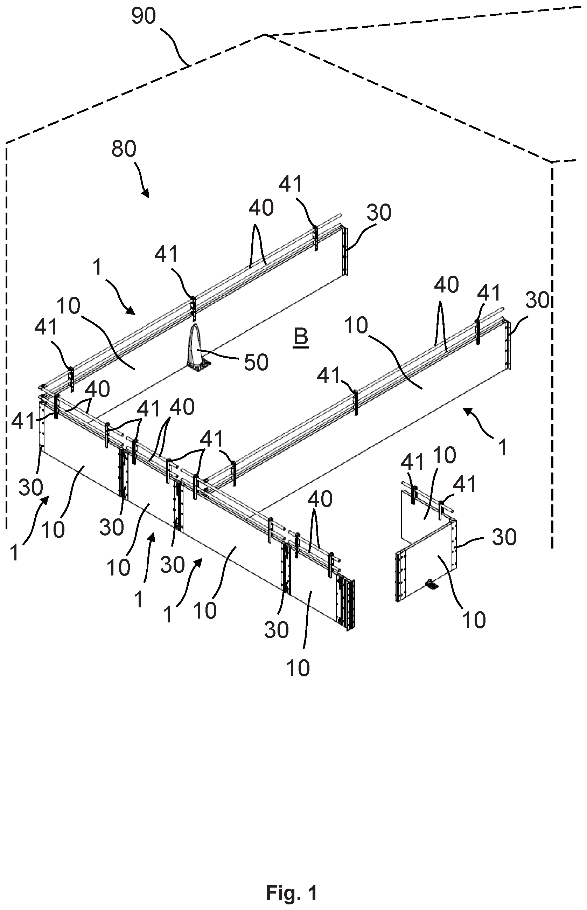

Fig. 1 zeigt eine schematische Darstellung eines Stalls 90, in dem eine Tierhaltungsbucht 80 angeordnet ist. Diese Tierhaltungsbucht 80 ist mit mehreren Haltungsbuchtsystemen 1 ausgestattet, die zusammen die Umrandung der Tierhaltungsbucht 80 ausbilden. Dabei sind Wandelemente 10 und Verbindungselemente 30 vorgesehen. Die Wandelemente sind über Bodenverbinder 50 mit dem Boden B des Stalls 90 fixiert. Die plattenförmigen Wandelemente 10 fungieren als Wandabschnitte der Tierhaltungsbucht 80. Diese Wandelemente 10 sind durch Verbindungselemente 30 miteinander verbunden. Oberhalb der Wandelemente 10 sind horizontal verlaufende Rohre 40 angeordnet. Die Rohre 40 sind mittels Rohrverbindungselementen 41 direkt mit den Wandelementen 10 verbunden.

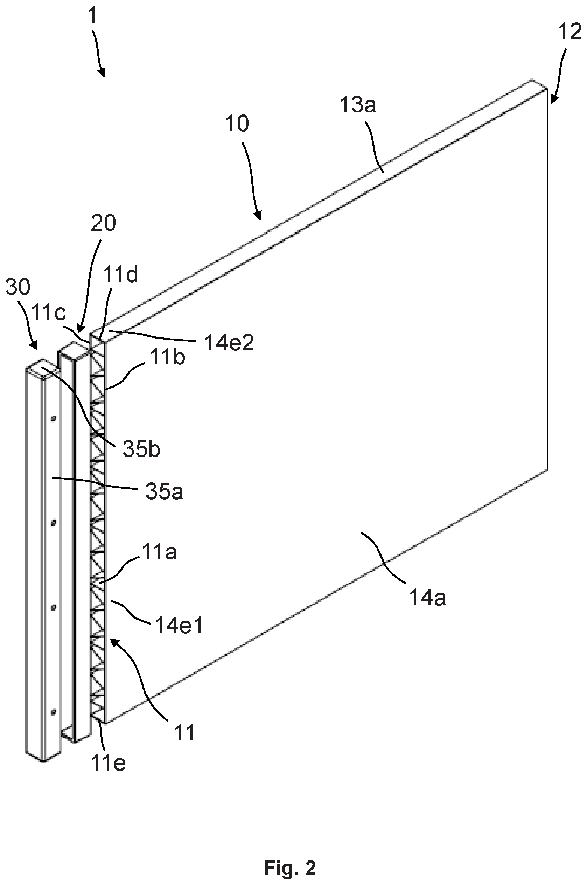

Fig. 2 zeigt eine perspektivische Ansicht eines Haltungsbuchtsystems 1 für eine Tierhaltungsbucht. Das Haltungsbuchtsystem 1 umfasst ein plattenförmiges Wandelement 10, ein Dichtungselement 20 und ein Verbindungselement 30. Die Bauteile sind in dem hier gezeigten Zustand nicht miteinander verbunden. Das Wandelement 10 weist Seitenflächen 13a, 14a und einen ersten Wandelementendabschnitt 11 auf. Der erste Wandelementendabschnitt 11 umfasst eine erste Stirnseite 11a und an die Stirnseite 11a angrenzende Seitenflächenendabschnitte 14e1, 14e2. Der Übergang zwischen der ersten Stirnseite 11a und den daran angrenzenden Seitenflächenendabschnitten 14e1, 14e2 wird durch die Kanten 11b, 11c, 11d, 11e gebildet. Das Wandelement 10 weist zudem einen zweiten Wandelementendabschnitt 12 auf, der auf der dem ersten Wandelementendabschnitt 11 gegenüberliegenden Seite des Wandelements 10 angeordnet ist.

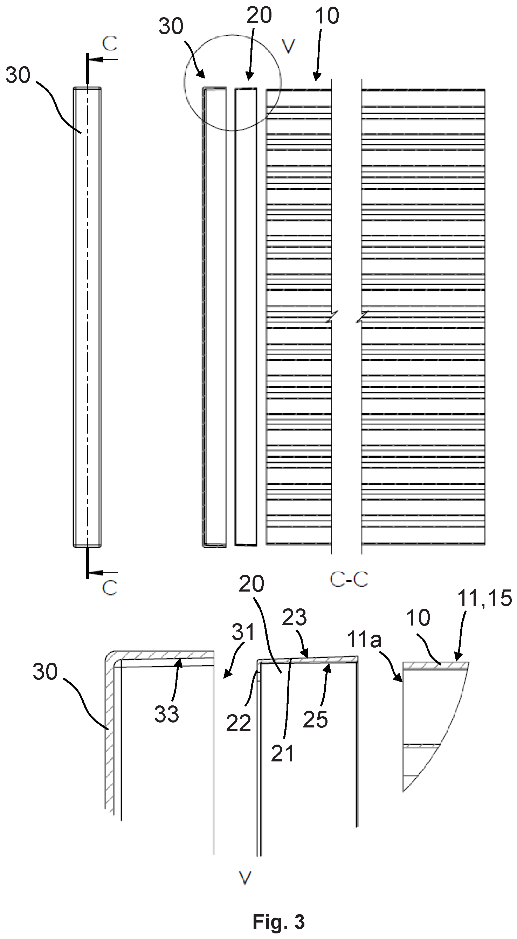

Fig. 3 zeigt mehrere Ansichten des in Fig. 2 gezeigten Haltungsbuchtsystems, wobei das Wandelement 10, das Dichtungselement 20 und das Verbindungselement 30 nicht miteinander verbunden sind. Oben links ist das Verbindungselement 30 gezeigt. Die darin eingezeichnete Schnittachse C-C gibt die Position und die Blickrichtung der rechts daneben dargestellten Schnittansicht C-C an, in der das Wandelement 10, das Dichtungselement 20 und das Verbindungselement 30 im Schnitt gezeigt sind. In der unten dargestellten Detailansicht V dieser Schnittansicht sind Details dieser Bauteile zu erkennen. Das plattenförmige Wandelement 10 weist eine Außenoberfläche 15 auf. Die Außenoberfläche 15 ist die Oberfläche des Wandelementendabschnitts 11 bzw. des Seitenflächenendabschnitts des Wandelements 10.

Das Dichtungselement 20, das an dem ersten Wandelementendabschnitt 11 anordenbar ist, weist eine Außenoberfläche 23 und eine Innenoberfläche 25 auf. Das Dichtungselement 20 weist einen 21 und 22 auf. Das Dichtungselement 20 ist so gestaltet, dass es zumindest teilweise innerhalb des Dichtungsaufnahmebereichs 31 des Verbindungselements 30 anordenbar ist. Das Verbindungselement 30 weist eine Innenoberfläche 33 auf, die den Dichtungsaufnahmebereich 31 begrenzt.

Das Dichtungselement 20 ist so gestaltet, dass es nach einem Aufschieben des Dichtungselements 20 auf das Wandelement 10 die Stirnseite 11a des Wandelements 10 teilweise abdeckt. Das Dichtungselement 20 weist einen Aufschiebeabschnitt 21 und einem Vorderabschnitt 22 auf. Der Aufschiebeabschnitt 21 ist auf die Seitenflächenendabschnitte des Wandelementendabschnitts 11 aufschiebbar, während der Vorderabschnitt 22 so konzipiert ist, dass er an der Stirnfläche 11a anliegt.

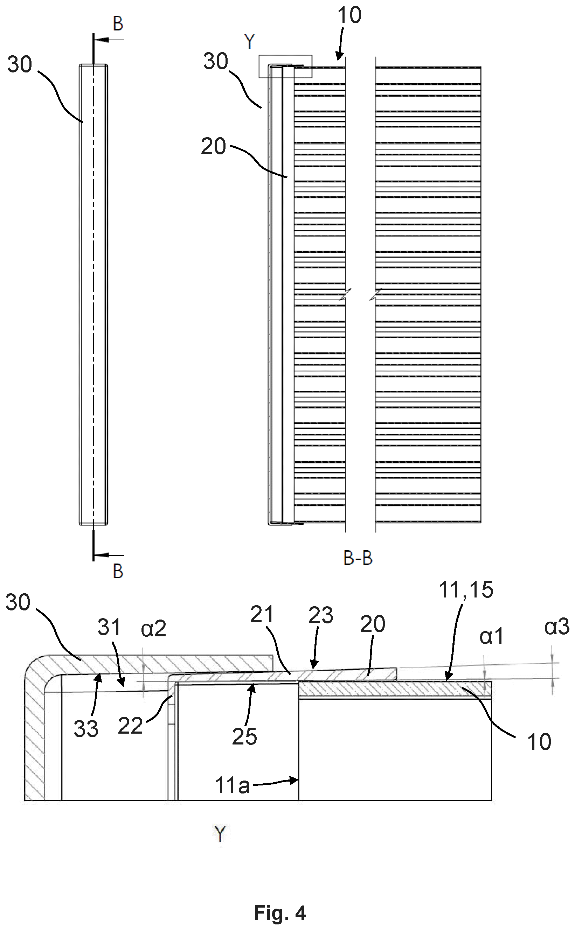

Fig. 4 zeigt mehrere Ansichten des in Fig. 2-3 gezeigten Haltungsbuchtsystems, wobei das Wandelement 10, das Dichtungselement 20 und das Verbindungselement 30 in einem Zustand während der Montage gezeigt sind. Oben links ist das Verbindungselement 30 gezeigt. Die darin eingezeichnete Schnittachse B-B gibt die Position und die Blickrichtung der rechts daneben dargestellten Schnittansicht B-B an, in der das Wandelement 10, das Dichtungselement 20 und das Verbindungselement 30 im Schnitt gezeigt sind. In der unten dargestellten Detailansicht Y dieser Schnittansicht sind Details dieser Bauteile zu erkennen.

Das Dichtungselement 20 ist in dem hier gezeigten Zustand bereits mit dem Aufschiebeabschnitt 21 zu einem Teil, aber noch nicht vollständig, auf das Wandelement 10 aufgeschoben. Außerdem ist das Dichtungselement 20 zu einem Teil, aber noch nicht vollständig, in dem Dichtungsaufnahmebereich 31 des Verbindungselements 30 angeordnet.

Die Innenoberfläche 25 des Dichtungselements 20 bildet im Bereich des Aufschiebeabschnitts 21 einen ersten Winkel α1 relativ zur Außenoberfläche 15 des Wandelements 10. Der erste Winkel α1 beträgt in diesem Ausführungsbeispiel 0,1°. Dieser erste Winkel ermöglicht insbesondere ein erleichtertes Aufziehen des Dichtungselements 20 auf das Wandelement 10.

Die Innenoberfläche 33 des Verbindungselements 30 bildet relativ zur Außenoberfläche 15 des Wandelements 10 einen zweiten Winkel α2, der in diesem Ausführungsbeispiel 1° beträgt. Dieser zweite Winkel ermöglicht insbesondere ein erleichtertes Einsetzen des Dichtungselements 20 in den Dichtungsaufnahmebereich 31 des Verbindungselements 30.

Die Innenoberfläche 25 und die Außenoberfläche 23 des Dichtungselements 20 verlaufen nicht parallel zueinander, sodass zwischen diesen beiden Oberflächen ein dritter Winkel α3 gebildet wird, der in dem hier gezeigten Ausführungsbeispiel 1,3° beträgt. Der dritte Winkel α3 ermöglicht insbesondere, dass erstens das Dichtungselement 20 relativ einfach zwischen dem Wandelement 10 und dem Verbindungselement 30 angeordnet werden kann, also eine einfache Montage möglich ist, und dass zweitens das Dichtungselement 20 zwischen der Außenoberfläche 15 des Wandelements 10 und der Innenoberfläche 33 des Verbindungselements zusammengedrückt wird, wodurch eine zuverlässige Dichtwirkung und eine kraftschlüssige Verbindung erreicht werden. Diese vorteilhaften Wirkungen werden insbesondere dann erreicht, wenn - wie hier - der erste Winkel α1 kleiner ist als der zweite Winkel α2 und der zweite Winkel α2 kleiner ist als der dritte Winkel α3.

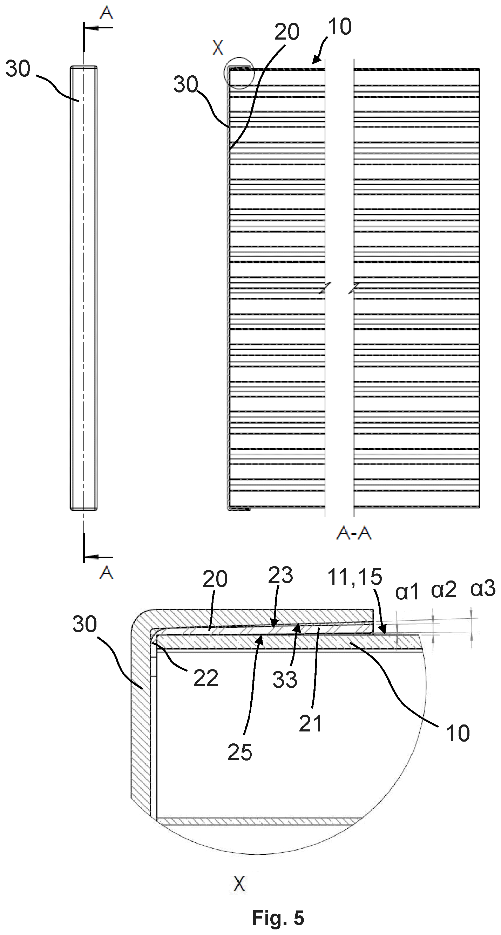

Fig. 5 zeigt mehrere Ansichten des in Fig. 2-4 gezeigten Haltungsbuchtsystems, wobei das Wandelement 10, das Dichtungselement 20 und das Verbindungselement 30 in einem montierten Zustand gezeigt sind. Oben links ist das Verbindungselement 30 gezeigt. Die darin eingezeichnete Schnittachse A-A gibt die Position und die Blickrichtung der rechts daneben dargestellten Schnittansicht A-A an, in der das Wandelement 10, das Dichtungselement 20 und das Verbindungselement 30 im Schnitt gezeigt sind. In der unten dargestellten Detailansicht X dieser Schnittansicht sind Details dieser Bauteile zu erkennen.

Das Verbindungselement 30 und das Dichtungselement 20 sind derart dimensioniert, dass zwischen der Innenoberfläche 33 des Verbindungselements 30 und der Außenoberfläche 23 des Dichtungselements 20 zumindest abschnittsweise eine Presspassung vorhanden ist, wie in Fig. 5 in der Detailansicht X erkennbar

Das Dichtungselement 20 und das Wandelement 10 sind derart dimensioniert, dass zwischen der Außenoberfläche 15 des Wandelements 10 und der Innenoberfläche 25 des Dichtungselements 20 eine Spielpassung vorhanden ist, wie in Fig. 5 in der Detailansicht X erkennbar. Diese Spielpassung ist aufgrund des Winkels α1 größer in dem hier rechts gezeigten Bereich des Aufschiebeabschnitts 21 und geringer in dem hier links gezeigten Bereich des Aufschiebeabschnitts 21. In dem Bereich, in dem der Aufschiebeabschnitt 21 in den Vorderabschnitt 22 übergeht, ist gar keine Spielpassung mehr zwischen Dichtungselement 20 und Wandelement 10 vorhanden.

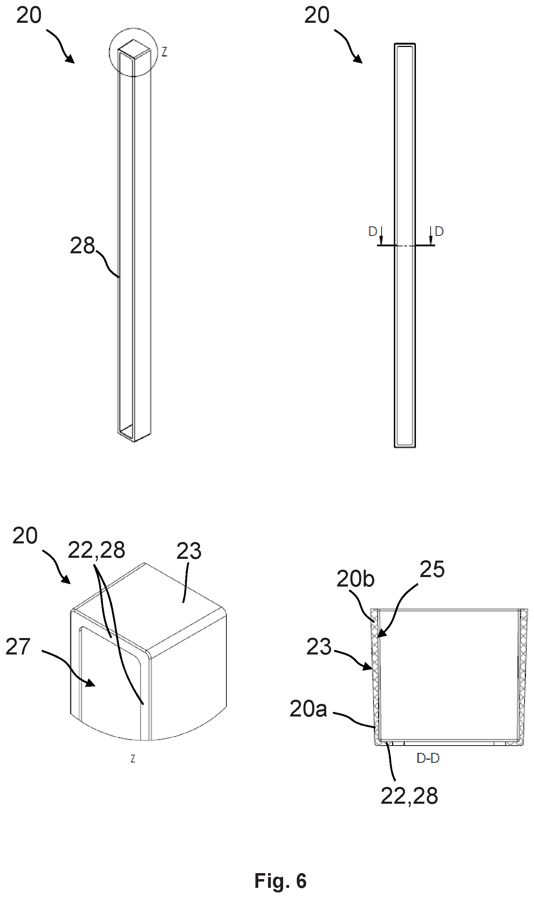

Fig. 6 zeigt mehrere Ansichten des Dichtungselements 20. Die obere linke Darstellung zeigt eine perspektivische Ansicht des Dichtungselements 20, das eine längliche, rechteckige Form aufweist. Das Dichtungselement 20 ist mit einem Kragen 28 versehen, der im montierten Zustand die Kanten des Wandelementendabschnitts abdeckt.

Die obere rechte Darstellung zeigt eine Seitenansicht des Dichtungselements 20. Hier ist die Schnittachse D-D eingezeichnet. Die untere rechte Darstellung zeigt einen Querschnitt des Dichtungselements 20 entlang der Linie D-D. In diesem Querschnitt sind die Innenoberfläche 25 und die Außenoberfläche 23 des Dichtungselements 20 zu sehen. Der Aufschiebeabschnitt 21 des Dichtungselements 20 weist zwei Abschnitte auf: einen ersten Abschnitt 20a, der an den Vorderabschnitt 22 angrenzt, und einen zweiten Abschnitt 20b, der weiter vom Vorderabschnitt 22 entfernt ist. Der erste Abschnitt 20a hat eine geringere Wandstärke als der zweite Abschnitt 20b, was das Aufschieben des Dichtungselements 20 auf den Wandelementendabschnitt erleichtert. Die Innenoberfläche 25 des Dichtungselements 20 ist im Bereich des Aufschiebeabschnitts 21 aufgeweitet, um eine bessere Passung zu gewährleisten.

Die untere linke Darstellung zeigt eine vergrößerte, perspektivische Ansicht eines Abschnitts des Dichtungselements 20. In dieser Ansicht sind der Vorderabschnitt 22, die Außenoberfläche 23 und der Kragen 28 des Dichtungselements 20 zu erkennen. Der Vorderabschnitt 22 liegt im montierten Zustand an der Stirnseite des Wandelementendabschnitts an, während der Kragen 28 die Kanten des Wandelementendabschnitts abdeckt. Der Kragen 28 bildet eine Öffnung 27, die zur Material- und Gewichtseinsparung vorgesehen ist und zu einer einfacheren Montage beitragen kann.

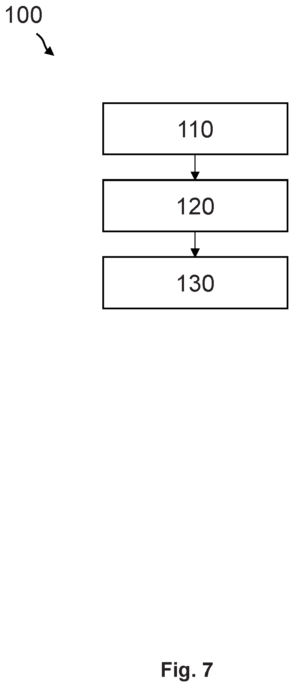

Fig. 7 zeigt ein schematisches Flussdiagramm eines Verfahrens 100 zum Zusammenbau einer Tierhaltungsbucht. Das Verfahren 100 umfasst folgende Schritte:
In einem Schritt 110, Bereitstellen eines Haltungsbuchtsystems für eine Tierhaltungsbucht, das Haltungsbuchtsystem umfassend: ein plattenförmiges Wandelement, das eine Außenoberfläche aufweist und das dazu ausgebildet ist, einen Wandabschnitt einer Tierhaltungsbucht auszubilden, wobei das Wandelement einen ersten Wandelementendabschnitt aufweist, wobei der erste Wandelementendabschnitt eine erste Stirnseite und an die Stirnseite angrenzende Seitenflächenendabschnitte aufweist, ein Verbindungselement, das eine Innenoberfläche aufweist und das einen Dichtungsaufnahmebereich aufweist, und ein Dichtungselement, das eine Außenoberfläche und eine Innenoberfläche aufweist und das an dem ersten Wandelementendabschnitt angeordnet und mit dem ersten Wandelementendabschnitt verbunden ist, wobei das Dichtungselement zumindest teilweise innerhalb des Dichtungsaufnahmebereichs des Verbindungselements angeordnet ist.
In einem Schritt 120, Aufschieben des Dichtungselements auf den Wandelementendabschnitt des Wandelements, sodass das Dichtungselement an der ersten Stirnseite des ersten Wandelementendabschnitts angeordnet ist, und vorzugsweise die Stirnseite zumindest teilweise bedeckt. In einem Schritt 130, Anordnen des Dichtungselements in dem Dichtungsaufnahmebereich des Verbindungselements.

### Bezugszeichenliste

- 1: Haltungsbuchtsystem
- 10: Wandelemente
- 11, 12: Wandelementendabschnitt
- 11a: Stirnseite des Wandelementendabschnitts
- 11b-e: Kanten des Wandelementendabschnitts
- 13a, 14a: Seitenflächen des Wandelements
- 14e1, 14e2: Seitenflächenendabschnitte
- 15: Außenoberfläche des Wandelements
- 20: Dichtungselement
- 20a: erster Abschnitt des Aufschiebeabschnitts
- 20b: zweiter Abschnitt des Aufschiebeabschnitts
- 21: Aufschiebeabschnitt des Dichtungselements
- 22: Vorderabschnitt des Dichtungselements
- 23: Außenoberfläche des Dichtungselements
- 25: Innenoberfläche des Dichtungselements
- 27: Öffnung des Dichtungselements
- 28: Kragen des Dichtungselements
- 30: Verbindungselement
- 31: Dichtungsaufnahmebereichs des Verbindungselements
- 33: Innenoberfläche des Verbindungselements
- 35a, 35b: Seitenwände des Verbindungselements
- 40: Rohre
- 41: Rohrverbindungselemente
- 50: Bodenverbinder
- 80: Tierhaltungsbucht
- 90: Stall
- 100: Verfahren
- 110-130: Verfahrensschritte
- B: Boden
- α1: erster Winkel
- α2: zweiter Winkel
- α3: dritter Winkel

## Patentansprüche

1. Haltungsbuchtsystem (1) für eine Tierhaltungsbucht (80), das Haltungsbuchtsystem (1) umfassend:
- ein plattenförmiges Wandelement (10), das eine Außenoberfläche (15) aufweist und das dazu ausgebildet ist, einen Wandabschnitt einer Tierhaltungsbucht (80) auszubilden, wobei das Wandelement (10) einen ersten Wandelementendabschnitt (11) aufweist, wobei der erste Wandelementendabschnitt (11) eine erste Stirnseite (11a) und an die Stirnseite (11a) angrenzende Seitenflächenendabschnitte (11b) aufweist,
- ein Verbindungselement (30), das eine Innenoberfläche (33) aufweist und das einen Dichtungsaufnahmebereich (31) aufweist, und
- ein Dichtungselement (20), das eine Außenoberfläche (23) und eine Innenoberfläche (25) aufweist und das an dem ersten Wandelementendabschnitt (11) angeordnet und mit dem ersten Wandelementendabschnitt (11) verbunden ist, wobei das Dichtungselement (20) zumindest teilweise innerhalb des Dichtungsaufnahmebereichs (31) des Verbindungselements (30) angeordnet ist.

2. Haltungsbuchtsystem (1) nach dem vorhergehenden Anspruch,
wobei die Außenoberfläche (23) des Dichtungselements (20) und die Innenoberfläche (33) des Verbindungselements (30) derart angeordnet und ausgebildet sind, dass zumindest abschnittsweise eine Presspassung zwischen der Außenoberfläche (23) des Dichtungselements (20) und der Innenoberfläche (33) des Verbindungselements (30) vorhanden ist,
wobei vorzugsweise mittels der Presspassung zwischen dem Dichtungselement (20) und dem Verbindungselement (30) eine kraftschlüssige, und vorzugsweise lösbare, Verbindung zwischen dem Dichtungselement (20) und dem Verbindungselement (30) ausgebildet wird.

3. Haltungsbuchtsystem (1) nach einem der vorhergehenden Ansprüche,
wobei die Außenoberfläche (15) des Wandelements (10) und die Innenoberfläche (25) des Dichtungselements (20) derart ausgebildet sind, dass zumindest abschnittsweise eine Spielpassung zwischen der Außenoberfläche (15) des Wandelements (10) und der Innenoberfläche (25) des Dichtungselements (20) vorhanden ist.

4. Haltungsbuchtsystem (1) nach einem der vorhergehenden Ansprüche,
wobei die Innenoberfläche (25) des Dichtungselements (20) aufgrund der Presspassung zwischen der Außenoberfläche (23) des Dichtungselements (20) und der Innenoberfläche (33) des Verbindungselements (30) auf die Außenoberfläche (15) des Wandelements (10) gedrückt wird, und/oder
wobei das Dichtungselement (20) zwischen der Innenoberfläche (33) des Verbindungselements (30) und der Außenoberfläche (15) des Wandelements (10) zusammengedrückt wird, und sich dabei elastisch verformt.

5. Haltungsbuchtsystem (1) nach einem der vorhergehenden Ansprüche,
wobei der Dichtungsaufnahmebereich (31) durch Seitenwände (35a, 35b) begrenzt ist, die derart angeordnet sind, dass der Dichtungsaufnahmebereich (31) eine Aufweitung in Richtung des Wandelements (10) aufweist.

6. Haltungsbuchtsystem (1) nach einem der vorhergehenden Ansprüche,
wobei das Dichtungselement (20) einen, vorzugsweise umlaufenden, Aufschiebeabschnitt (21), der auf die Seitenflächenendabschnitte (11b) des ersten Wandelementendabschnitts (11) aufschiebbar ist, und einen Vorderabschnitt (22), der ausgebildet ist, um zumindest teilweise an der ersten Stirnfläche (11a) des ersten Wandelementendabschnitts (11) anzuliegen, aufweist, und/oder
wobei das Dichtungselement (20) zumindest teilweise an der ersten Stirnseite (11a) des ersten Wandelementendabschnitts (11) und/oder zumindest teilweise an den Seitenflächenendabschnitten (11b) des ersten Wandelementendabschnitts (11) anliegt.

7. Haltungsbuchtsystem (1) nach einem der vorhergehenden Ansprüche,
wobei die Innenoberfläche (25) des Dichtungselements (20) im Bereich des Aufschiebeabschnitts (21) des Dichtungselements (20) aufgeweitet ausgebildet ist, und/oder
wobei die Passung zwischen Dichtungselement (20) und Wandelementendabschnitt (11)
- in einem dem Vorderabschnitt (22) des Dichtungselements (20) fernliegenden zweiten Abschnitt (20b) des Aufschiebeabschnitts ein erstes Spiel aufweist, und vorzugsweise
- in einem an den Vorderabschnitt (22) des Dichtungselements (20) angrenzenden ersten Abschnitt (20a) des Aufschiebeabschnitts (21) ein zweites Spiel, das geringer als das erste Spiel ist, oder kein Spiel aufweist.

8. Haltungsbuchtsystem (1) nach einem der vorhergehenden Ansprüche,
wobei die Innenoberfläche (25) des Dichtungselements (20) im Bereich des Aufschiebeabschnitts (21) des Dichtungselements (20) vor dem Aufschieben des Dichtungselements (20) auf den Wandelementendabschnitt (11) relativ zur Außenoberfläche (15) des Wandelements (10) einen ersten Winkel (α1) ausbildet,
wobei vorzugsweise der erste Winkel (α1) mindestens 0,1°, vorzugsweise mindestens 0,2°, besonders bevorzugt mindestens 0,3°, und/oder höchstens 3°, vorzugsweise höchstens 2,5°, besonders bevorzugt höchstens 2°, beträgt, und/oder
wobei die Innenoberfläche (33) des Verbindungselements (30) relativ zur Außenoberfläche (15) des Wandelements (10) einen zweiten Winkel (α2) ausbildet,
wobei vorzugsweise der zweite Winkel (α2) mindestens 0,2°, vorzugsweise mindestens 0,3°, besonders bevorzugt mindestens 0,5°, und/oder höchstens 5°, vorzugsweise höchstens 4°, besonders bevorzugt höchstens 3°, beträgt.

9. Haltungsbuchtsystem (1) nach einem der vorhergehenden Ansprüche,
wobei der Aufschiebeabschnitt (21) des Dichtungselements (20) eine Wandstärke aufweist, die nicht konstant ist, sondern ausgehend von dem Vorderabschnitt (22) des Dichtungselements (20) entlang des Aufschiebeabschnitts (21) zunimmt, und/oder
wobei die Innenoberfläche (25) des Dichtungselements (20) und die Außenoberfläche (23) des Dichtungselements nicht parallel zueinander verlaufen, sodass zwischen der Innenoberfläche (25) des Dichtungselements (20) und der Außenoberfläche (23) des Dichtungselements ein dritter Winkel (α3) gebildet wird,
wobei vorzugsweise der dritte Winkel (α3) mindestens 0,2°, vorzugsweise mindestens 0,3°, besonders bevorzugt mindestens 0,5°, und/oder höchstens 5°, vorzugsweise höchstens 4°, besonders bevorzugt höchstens 3°, beträgt, und/oder
wobei der dritte Winkel (α3) größer ist als die Summe aus dem ersten Winkel (α1) und dem zweiten Winkel (α2), und/oder
wobei der erste Winkel (α1) kleiner ist als der zweite Winkel (α2) und/oder der zweite Winkel (α2) kleiner ist als der dritte Winkel (α3).

10. Haltungsbuchtsystem (1) nach einem der vorhergehenden Ansprüche,
wobei die erste Stirnseite (11a) durch mehrere, insbesondere vier, Kanten (11b, 11c, 11d, 11e) des ersten Wandelementendabschnittes (11) des Wandelements (10) begrenzt ist, wobei das Dichtungselement (20) die Kanten (11b, 11c, 11d, 11e) des ersten Wandelementendabschnitts (11) des Wandelements (10), vorzugsweise vollständig, abdeckt,
wobei vorzugsweise das Dichtungselement (20) einen Kragen (28) aufweist, der die Kanten (11b, 11c, 11d, 11e) des ersten Wandelementendabschnitts (11) des Wandelements (10), vorzugsweise vollständig, abdeckt, wobei vorzugsweise der Kragen (28) die Stirnseite (11a) nicht vollständig abdeckt.

11. Haltungsbuchtsystem (1) nach einem der vorhergehenden Ansprüche,
wobei das Dichtungselement (20) lösbar mit dem Verbindungselement (30) verbunden, und vorzugsweise in das Verbindungselement (30) einschiebbar, ist, und/oder
wobei das Dichtungselement (20) lösbar mit dem ersten Wandelementendabschnitt (11) verbunden, und vorzugsweise auf den Wandelementendabschnitt (1) aufschiebbar, ist.

12. Haltungsbuchtsystem (1) nach einem der vorhergehenden Ansprüche,
wobei das Wandelement (10) Kunststoff, vorzugsweise einen thermoplastischen Kunststoff, umfasst oder daraus besteht und vorzugsweise als Leichtbauplatte, insbesondere mit darin vorhandenen Hohlräumen, ausgebildet ist, und/oder
wobei das Dichtungselement (20) Kunststoff, vorzugsweise in Form eines Elastomers oder in Form von Weich-PVC, umfasst oder daraus besteht, und/oder
wobei das Verbindungselement (30) Kunststoff, vorzugsweise einen thermoplastischen Kunststoff, umfasst oder daraus besteht, und/oder
wobei das Wandelement (10) einen zweiten Wandelementendabschnitt (12) aufweist, der auf der dem ersten Wandelementendabschnitt (11) gegenüberliegenden Seite des Wandelements (10) angeordnet ist, zur Verbindung mit einem weiteren Dichtungselement, das vorzugsweise wie das Dichtungselement (20) ausgebildet ist.

13. Tierhaltungsbucht (80), umfassend mehrere Haltungsbuchtsysteme nach einem der vorhergehenden Ansprüche, wobei vorzugsweise oberhalb der Wandelemente (10) horizontal verlaufende Rohre (40) angeordnet sind, die bevorzugt mittels Rohrverbindungselementen (41) direkt mit dem jeweiligen Wandelement (40) verbunden sind.

14. Stall (90) für die Tierhaltung, wobei der Stall mindestens eine Tierhaltungsbucht (80), vorzugsweise mehrere Tierhaltungsbuchten (80), nach dem vorhergehenden Anspruch umfasst.

15. Verfahren (100) zum Zusammenbau einer Tierhaltungsbucht (80), vorzugsweise einer Tierhaltungsbucht nach Anspruch 13, das Verfahren umfassend:
- Bereitstellen (110) eines Haltungsbuchtsystems (1) für eine Tierhaltungsbucht (80), vorzugsweise eines Haltungsbuchtsystems (1) nach einem der vorhergehenden Ansprüche 1-12, das Haltungsbuchtsystem (1) umfassend:
∘ ein plattenförmiges Wandelement (10), das eine Außenoberfläche (15) aufweist und das dazu ausgebildet ist, einen Wandabschnitt einer Tierhaltungsbucht (80) auszubilden, wobei das Wandelement (10) einen ersten Wandelementendabschnitt (11) aufweist, wobei der erste Wandelementendabschnitt (11) eine erste Stirnseite (11a) und an die Stirnseite (11a) angrenzende Seitenflächenendabschnitte (11b) aufweist,
∘ ein Verbindungselement (30), das eine Innenoberfläche (33) aufweist und das einen Dichtungsaufnahmebereich (31) aufweist, und
∘ ein Dichtungselement (20), das eine Außenoberfläche (23) und eine Innenoberfläche (25) aufweist und das an dem ersten Wandelementendabschnitt (11) angeordnet und mit dem ersten Wandelementendabschnitt (11) verbunden ist, wobei das Dichtungselement (20) zumindest teilweise innerhalb des Dichtungsaufnahmebereichs (31) des Verbindungselements (30) angeordnet ist,
- Aufschieben (120) des Dichtungselements (20) auf den Wandelementendabschnitt (11) des Wandelements (10), sodass das Dichtungselement (20) an der ersten Stirnseite (11a) des ersten Wandelementendabschnitts (11) angeordnet ist, und vorzugsweise die Stirnseite (11a) zumindest teilweise bedeckt,
- Anordnen (130) des Dichtungselements (20) in dem Dichtungsaufnahmebereich (31) des Verbindungselements (30).
